# EUROPÄISCHE PATENTSCHRIFT

(11) **EP 2 804 250 B1**
(45) Veröffentlichungstag und Bekanntmachung des Hinweises auf die Patenterteilung: **23.12.2015**
(21) Anmeldenummer: 13168266.8
(22) Anmeldetag: 17.05.2013
(51) Int. Cl.: H01M 10/48, G01K 1/14, H01M 10/42

(54) **Batteriesystem mit einem elastischen Halteelement für einen Temperatursensor**
Battery system with an elastic retaining element for a temperature sensor
Système de batterie comprenant un élément de retenue élastique pour un capteur de température

(43) Veröffentlichungstag der Anmeldung: 19.11.2014
(73) Patentinhaber: Samsung SDI Co., Ltd., Yongin-si, Gyeonggi-do (KR)
(72) Erfinder: FAULAND, David, 8522 Groß St. Florian (AT)
(74) Vertreter: Gulde & Partner

(56) Entgegenhaltungen:
- US-A1- 2010 136 392
- US-A1- 2010 285 340

## Beschreibung

Die vorliegende Erfindung betrifft ein Batteriesystem, umfassend eine Vielzahl von Zellen, einen Temperatursensor der dazu eingerichtet ist die Temperatur an einer Oberfläche von zumindest einer Zelle zu erfassen, und ein elastisches Halteelement das dazu eingerichtet ist den Temperatursensor an die Oberfläche der zumindest einen Zelle zu drücken und an einer Aufnahmevorrichtung abgestützt ist.

Derartige Batteriesysteme werden insbesondere als Energiespeicher für den Antrieb von Elektro- und/oder Hybridfahrzeugen eingesetzt.

Eine Vorrichtung der gattungsgemäßen Art ist aus der US 2010/0136392 A1 bekannt. Dabei ist eine flache Leiterplatte über einem Zell-Gehäuse angeordnet, wobei die Leiterplatte eine Öffnung oberhalb einer Temperatur-Mess-Stelle am Zellgehäuse sowie elektrische Kontakte aufweist, welche um die Öffnung herum angeordnet sind. In der Öffnung wird ein Temperatursensor aufgenommen, der einen Stecker zur mechanischen Verrastung mit der Leiterplatte aufweist. Ein Fortsatz des Sensors weist einen Temperaturfühler sowie ein kompressibles Element auf. Durch das kompressible Element wird der Temperaturfühler gegen das Zellgehäuse gedrückt, wobei sich das kompressible Element am Stecker abstützt.

Bei den genannten Anwendungen ist es erwünscht, einen guten Wärmeübergang zwischen Temperatursensor und Zelle zu erreichen. Insbesondere soll ein Luftspalt zwischen Temperatursensor und Zelle vermieden werden. Ein elastisches oder kompressibles Element gewährleistet jedoch noch keinen optimalen Wärmeübergang von der Zelle zum Temperatursensor. Insbesondere Schiefstellungen in der Halterung, oder große Toleranzen im Höhenabstand zwischen Halterung des Temperatursensors und der Messfläche können die Lage des Temperatursensors an der Mess-Stelle, und damit den Wärmeübergang negativ beeinflussen.

Es ist eine Aufgabe der Erfindung Batteriesysteme der genannten Art so zu verbessern, dass Lage-Toleranzen zwischen der Halterung des Temperatursensors und der Mess-Stelle an der Zelle nicht zu einer Verschlechterung des Wärmeübergangs von Temperatursensor zu Zelle führen, und dabei einfach und kostengünstig in der Herstellung sind.

Die Lösung der Aufgabe erfolgt durch ein Batteriesystem, umfassend eine Vielzahl von Zellen, einen Temperatursensor der dazu eingerichtet ist die Temperatur an einer Oberfläche von zumindest einer Zelle zu erfassen, ein elastisches Halteelement das dazu eingerichtet ist den Temperatursensor an die Oberfläche der zumindest einen Zelle zu drücken und an einer Aufnahmevorrichtung abgestützt ist, wobei das Halteelement einen ersten Absatz oder einen Konus aufweist und einen zweiten Absatz aufweist, wobei der erste Absatz als Anschlag für einen ersten Absatz des Temperatursensors wirksam ist oder die Konus-Verjüngung einen Anschlag für den ersten Absatz des Temperatursensors bildet, und wobei der zweite Absatz nur bei hinreichender Verformung des Halteelements als Anschlag für einen zweiten Absatz des Temperatursensors wirksam ist.

Erfindungsgemäß wird durch die Ausgestaltung des Halteelements eine zweistufige Elastizität zur Positionierung des Temperatursensors gebildet. Dadurch, dass der zweite Absatz erst durch Verformung als Anschlag für den zweiten Absatz des Temperatursensors wirksam wird, und der Temperatursensor derart nur an einer Stelle gehalten wird, kann eine allfällige Schiefstellung zwischen Oberfläche der Zelle und Temperatursensor gut kompensiert werden. Wird das Halteelement hinreichend verformt, und kommt so der zweite Absatz des Halteelements in Eingriff mit dem zweiten Absatz des Temperatursensors, so wird der Temperatursensor durch das Halteelement an zwei Stellen gehalten. Der Verbund Temperatursensor und Halteelement wird somit steifer, wodurch der Temperatursensor sicher gehalten wird. Toleranzen im Höhenabstand zwischen Zelle und Aufnahmevorrichtung können durch die elastischen Eigenschaften des Halteelements auch dann gut kompensiert werden, wenn beide Absätze des Halteelements mit beiden Absätzen des Temperatursensors im Eingriff sind.

Unter "Absatz" wird in diesem Zusammenhang jede Fläche von Temperatursensor, Halteelement oder Aufnahmevorrichtung verstanden, die als Anschlag zu zumindest einem dieser Elemente dienen kann. Weist ein freies Ende von Temperatursensor oder Halteelement eine derartige Fläche auf, so wird auch diese Fläche als Absatz angesehen.

Weiterbildungen der Erfindung sind in den abhängigen Ansprüchen, der Beschreibung sowie den beigefügten Zeichnungen angegeben.

Gemäß einer Ausführungsform der Erfindung weist das Halteelement anstatt dem ersten Absatz einen Konus auf, wobei die Konus-Verjüngung einen Anschlag für den ersten Absatz des Temperatursensors bildet. Der Temperatursensor weist dazu bevorzugt zumindest abschnittsweise eine zylindrische Form auf. Der Durchmesser des zylindrischen Abschnitts des Temperatursensors ist dabei so gewählt, dass der Temperatursensor am weiteren Ende des Konus in das Halteelement eingeführt, jedoch nicht durch das jüngere Ende des Konus durchgeführt werden kann. Durch den Ersatz des ersten Absatzes durch den Konus wird eine Schiefstellung des Temperatursensors zur Kompensation einer Schiefstellung zwischen Aufnahmevorrichtung und Zelle erleichtert.

Gemäß einer weiteren Ausgestaltung der Erfindung besteht im unbelasteten Zustand des Halteelements ein Spalt zwischen dem zweiten Absatz des Halteelements und dem zweiten Absatz des Temperatursensors. Dieser Spalt beträgt bevorzugt weniger als 2 mm. Durch den Spalt wird sichergestellt, dass erst durch Verformung des Halteelements der zweite Absatz des Halteelements in Eingriff mit dem zweiten Absatz des Temperatursensors kommt. Dadurch wird auch die mechanische Belastung des Temperatursensors selbst reduziert.

Vorzugsweise umfasst das Halteelement einen ersten Abschnitt und einen zweiten Abschnitt, wobei der erste Absatz im ersten Abschnitt und der zweite Absatz im zweiten Abschnitt angeordnet ist. Der zweite Abschnitt weist zur Verringerung der Steifigkeit eine geringere Querschnittsfläche auf als der erste Abschnitt. Ist anstelle des ersten Absatzes ein Konus vorgesehen, so ist jener Bereich des Konus, der als Anschlag für den Temperatursensor wirkt, im ersten Abschnitt angeordnet. Durch die geringere Steifigkeit des zweiten Abschnitts wird eine Kompensation einer Schiefstellung zwischen Aufnahmevorrichtung und Zelle zusätzlich verbessert. Zusätzlich wird die mechanische Belastung auf die Aufnahmevorrichtung reduziert, da die zur Verformung des zweiten Abschnitts erforderliche Kraft geringer ist als die zur Verformung des ersten Abschnitts erforderliche Kraft.

Gemäß einer Ausführungsform der Erfindung weist der erste Abschnitt des Halteelements einen dritten Absatz auf, welcher zumindest abschnittsweise auf einer ersten Fläche der Aufnahmevorrichtung aufliegt. Zusätzlich weist der erste Abschnitt des Halteelements einen vierten Absatz auf, der zumindest abschnittsweise auf einer zweiten, der ersten Fläche gegenüberliegenden Fläche der Aufnahmevorrichtung aufliegt. Mittels dem dritten und vierten Absatz des Halteelements wird das Halteelement in einer Öffnung der Aufnahmevorrichtung befestigt. Derart kann die Kraft, die bei der Kompression des Halteelements durch Kontakt zwischen Temperatursensor und Zelle entsteht, an der Aufnahmevorrichtung abgestützt werden. Der Hinterschnitt, der durch dritten und vierten Absatz gebildet wird, ist gering genug dass das Halteelement von Hand in die Aufnahmevorrichtung einbringbar ist. Durch die höhere Steifigkeit des ersten Abschnitts wiederum ist gewährleistet, dass das Halteelement nicht durch die Abstützkraft aus der Aufnahmevorrichtung herausgedrückt werden kann. Die Flächen von dritten und vierten Absatz sollen jedoch groß genug sein, dass eine Versprödung durch Alterung des Halteelements nicht zu einer ungleichmäßigen Belastung führt.

Vorzugsweise ist die Aufnahmevorrichtung durch eine Elektronikeinheit gebildet, die zur Erfassung von Betriebsgrößen von zumindest einzelnen Zellen eingerichtet ist. Zu den Betriebsgrößen gehören neben der Zellspannung auch die Temperatur der Zelle. Die Elektronikeinheit weist dazu Kontaktelemente auf, an denen das Signal des Temperatursensors aufgenommen wird. Durch die unmittelbare Nähe zwischen Temperatursensor und den Kontaktelementen an der Elektronikeinheit wird die Mess-Genauigkeit erhöht, da die Anzahl an Schnittstellen zwischen Sensor und Elektronikeinheit gering ist. Eine geringere Anzahl von Schnittstellen reduziert das Risiko von einer Beeinträchtigung des Sensorsignals durch Spannungsabfällen an den Schnittstellen.

Gemäß einer Ausführungsform der Erfindung ist die Aufnahmevorrichtung durch einen Zellverbinder-Halter gebildet. Der Zellverbinder-Halter weist Abschnitte zum Halten von Zellverbindern auf. Durch die Zellverbinder sind einzelne Zellen elektrisch miteinander verbunden. Die Mess-Stelle an der Zelloberfläche, an der die Temperatur der Zelle durch den Temperatursensor gemessen wird, ist bevorzugt an der Seite der Zelle angeordnet an der auch die Polanschlüsse der Zelle angeordnet sind. Die Polanschlüsse bilden die elektrischen Schnittstellen von Zellverbinder zu Zelle. Daher ist eine Aufnahme des Halteelements im Zellverbinder-Halter geometrisch vorteilhaft.

Gemäß einer weiteren Ausgestaltung der Erfindung weist der Temperatursensor einen Sensorabschnitt und einen Leitungsabschnitt auf, wobei der Sensorabschnitt an einem Ende des Halteelements hervorsteht und wobei der Leitungsabschnitt durch das Halteelement hindurchgeführt ist. Das Halteelement weist dazu eine entsprechende Öffnung auf. Ist die Aufnahmevorrichtung als Elektronikeinheit ausgebildet, so kann das freie Ende des Leitungsabschnitts auf einfache Weise an Kontaktelementen der Elektronikeinheit kontaktiert werden. Dadurch wird die Herstellung der Kommunikationsverbindung zwischen Temperatursensor und Elektronikeinheit vereinfacht.

Vorzugsweise besteht das Halteelement aus einem Elastomer, bevorzugt aus EPDM (Ethylen-Propylen-Dien-Kautschuk). Alternativ dazu kann auch HNBR (Hydrierter Acrylnitrilbutadien-Kautschuk) oder Silikon verwendet werden.

Die Erfindung wird im Folgenden beispielhaft unter Bezugnahme auf die Zeichnungen beschrieben.
- Fig. 1: zeigt eine isometrische Ansicht eines Halteelements.
- Fig. 2: zeigt eine Schnittansicht des Halteelements.
- Fig. 3: zeigt eine Schnittansicht eines Temperatursensors.
- Fig. 4: zeigt eine schematische Schnittansicht eines Batteriesystems.

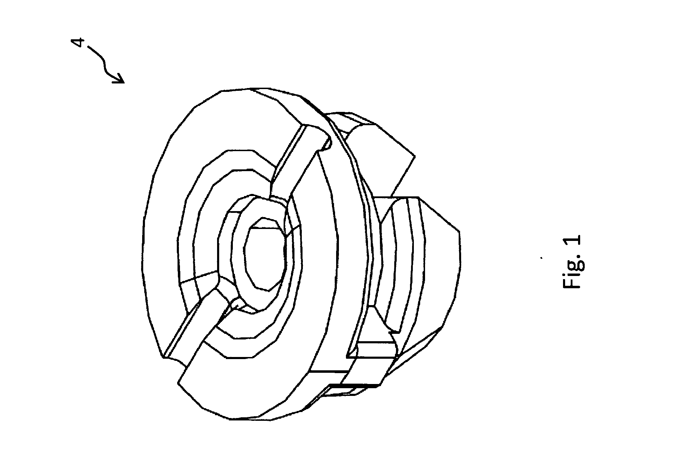

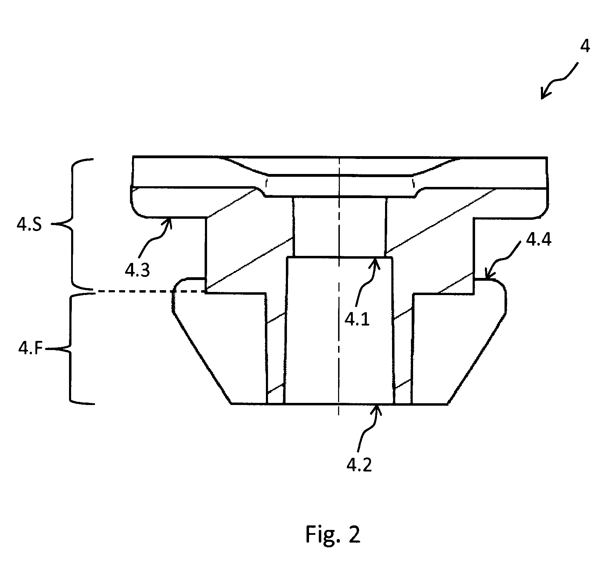

In der Fig. 1 ist eine isometrische Ansicht eines Halteelements 4 dargestellt. Fig. 2 zeigt eine Schnittansicht einer ersten Ausführungsform des Halteelements 4. Das Halteelement 4 ist aus EPDM gefertigt und weist somit elastische Eigenschaften auf. Das Halteelement 4 weist einen ersten Abschnitt 4.S und einen zweiten Abschnitt 4.F auf. Die Querschnittsfläche des ersten Abschnitts 4.S ist zumindest abschnittsweise größer als die Querschnittsfläche des zweiten Abschnitts 4.F. Dadurch ist der erste Abschnitt 4.S deutlich steifer als der zweite Abschnitt 4.F. Das Halteelement 4 weist einen ersten Absatz 4.1 auf, welcher im ersten Abschnitt 4.S ausgebildet ist. Der erste Absatz 4.1 ist dabei als abgesetzte Stufe im Inneren des Halteelements 4 ausgebildet. Das Halteelement 4 weist auch einen zweiten Absatz 4.2 auf. Der zweite Absatz 4.2 ist im zweiten Abschnitt 4.F angeordnet, und ist als Abschlussfläche des Halteelements 4 ausgebildet. Zusätzlich weist das Halteelement 4 einen dritten Absatz 4.3 und einen vierten Absatz 4.4 auf. Dritter Absatz 4.3 und vierter Absatz 4.4 sind im ersten Abschnitt 4.S angeordnet. Dritter Absatz 4.3 und vierter Absatz 4.4 bilden Flächen an der Außenseite des Halteelements 4, die zueinander weisen. Dritter Absatz 4.3 und vierter Absatz 4.4 bilden somit einen Hinterschnitt.

In einer nicht dargestellten zweiten Ausführungsform des Halteelements 4 ist anstelle des ersten Absatzes 4.1 ein Konus vorgesehen. Der Konus wird durch eine sich verjüngende Öffnung im Halteelement 4 gebildet, wobei der Durchmesser der Öffnung ausgehend vom zweiten Abschnitt 4.F zum ersten Abschnitt 4.S hin stetig abnimmt.

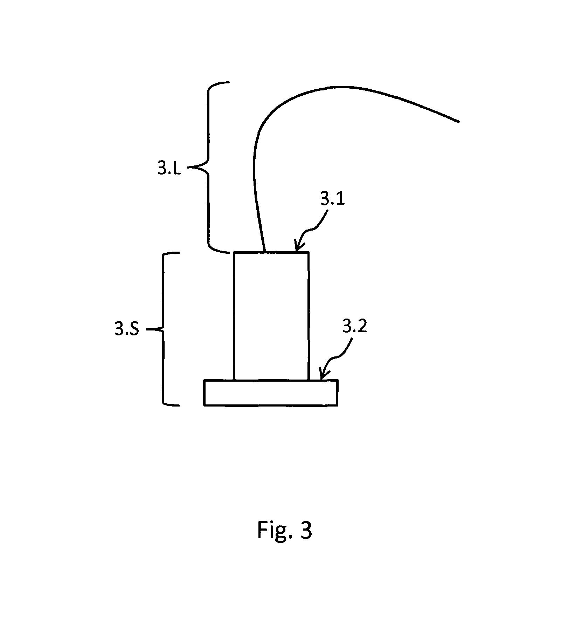

Fig. 3 zeigt eine Schnittansicht eines Temperatursensors 3. Der Temperatursensor weist einen Sensorabschnitt 3.S und einen Leitungsabschnitt 3.L auf. Der Sensorabschnitt 3.S beherbergt einen Temperaturfühler, der als stark temperaturabhängiger elektrischer Widerstand ausgebildet ist, beispielsweise als NTC- oder PTC-Element. In der gegenständlichen Ausführungsform ist der Sensorabschnitt 3.S bevorzugt rotationssymmetrisch aufgebaut. Der Leitungsabschnitt 3.L ist durch eine oder mehrere elektrische Leitungen gebildet, an denen das Signal des Temperaturfühlers abgreifbar ist. Der Temperatursensor weist einen ersten Absatz 3.1 und einen zweiten Absatz 3.2 auf. Der erste Absatz 3.1 bildet das freie Ende des Sensorabschnitts 3.S, an dem der Sensorabschnitt 3.S in den Leitungsabschnitt 3.L übergeht. Der zweite Absatz 3.2 ist ebenfalls im Sensorabschnitt 3.S angeordnet, und bildet eine Fläche die zum Leitungsabschnitt 3.L hin weist. Die dem zweiten Absatz 3.2 gegenüberliegende Fläche bildet ein freies Ende des Sensorabschnitts 3.S aus, und ist jene Fläche die in Berührung mit der Zelloberfläche kommt.

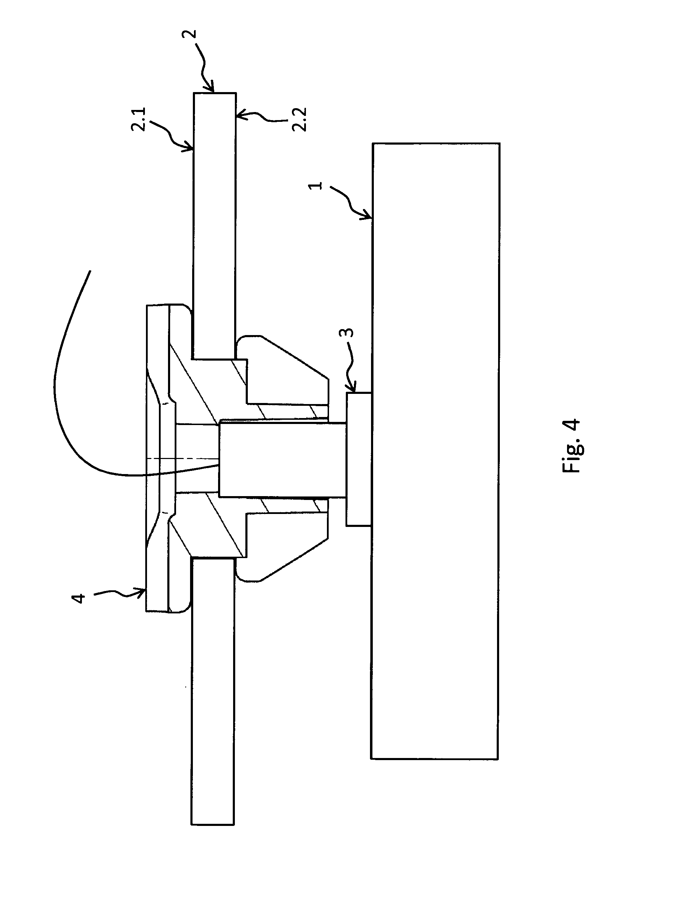

Fig. 4 zeigt eine schematische Schnittansicht eines Batteriesystems, wobei eine Zelle 1, der Temperatursensor 3, eine Aufnahmevorrichtung 2 und das Halteelement 4 dargestellt sind. Die Aufnahmevorrichtung 2 weist eine erste Fläche 2.1 und eine zweite, der ersten Fläche 2.1 gegenüberliegenden Fläche 2.2 auf. Das Halteelement 4 ist so an der Aufnahmevorrichtung 2 eingesetzt, dass der dritte Absatz 4.3 zumindest abschnittsweise auf der ersten Fläche 2.1 aufliegt, und dass der vierte Absatz 4.4 zumindest abschnittsweise auf der zweiten Fläche 2.2 aufliegt. Der Abstand zwischen der zweiten Fläche 2.2 und der Oberfläche der Zelle 1 sowie die geometrische Ausbildung des Halteelements 4 und des Temperatatursensors 3 ist so gewählt, dass unter Berücksichtigung der beteiligten Toleranzen es zu einer Verformung des Halteelements 4 kommen muss, sodass der Temperatursensor 3 auf die Oberfläche der Zelle 1 gedrückt wird.

Im unbelasteten Zustand des Halteelements 4, d.h. wenn der Verbund von Halteelement 4 und Temperatursensor 3 nicht zwischen Aufnahmevorrichtung 2 und Zelle 1 verspannt ist, besteht zwischen dem zweiten Absatz 4.2 des Halteelements 4 und dem zweiten Absatz 3.2 des Temperatursensors 3 ein Spalt. Im belasteten Zustand des Halteelements 4, d.h. wenn der Verbund von Halteelement 4 und Temperatursensor 3 zwischen Aufnahmevorrichtung 2 und Zelle 1 verspannt ist, verringert sich durch die geringere Steifigkeit des ersten Abschnitts 4.F des Halteelements 4 zunächst der Spalt. Der Spalt muss dabei jedoch nicht völlig überwunden werden. Lässt Abstand und Lage zwischen Zelle 1 und Aufnahmevorrichtung 2 es zu, so kann auch im belasteten Zustand des Halteelements 4 ein, im Vergleich zum unbelasteten Zustand geringerer Spalt bestehen bleiben.

In der dargestellten Ausführungsform des Halteelements 4 wirkt der erste Absatz 4.1 des Halteelements 4 als Anschlag für den ersten Absatz 3.1 des Temperatursensors 3. Zwischen dem zweiten Absatz 4.2 des Halteelements 4 und dem zweiten Absatz 3.2 des Temperatursensors 3 ist ein Spalt, der erst bei weiterer Verformung des Halteelements 4 sich so verringert dass der zweite Absatz 4.2 des Halteelements 4 als Anschlag für den zweiten Absatz 3.2 des Temperatursensors 3 wirkt.

Ist anstelle des ersten Absatzes 4.1 ein Konus vorgesehen, so ist der Konus so dimensioniert dass der Sensorabschnitt 3.S des Temperatursensors so weit in den Konus einführbar ist, bis der erste Absatz 3.1 des Temperatursensors 3 im Konus ansteht.

### Bezugszeichenliste

- 1: Zelle
- 2: Aufnahmevorrichtung
- 2.1: Erste Fläche
- 2.2: Zweite Fläche
- 3: Temperatursensor
- 3.1: Erster Absatz des Temperatursensors
- 3.2: Zweiter Absatz des Temperatursensors
- 3.S: Sensorabschnitt
- 3.L: Leitungsabschnitt
- 4: Halteelement
- 4.1: Erster Absatz
- 4.2: Zweiter Absatz
- 4.3: Dritter Absatz
- 4.4: Vierter Absatz
- 4.F: Erster Abschnitt
- 4.S: Zweiter Abschnitt

## Patentansprüche

1. Batteriesystem, umfassend eine Vielzahl von Zellen (1), einen Temperatursensor (3) der dazu eingerichtet ist die Temperatur an einer Oberfläche von zumindest einer Zelle (1) zu erfassen, ein elastisches Halteelement (4) das dazu eingerichtet ist den Temperatursensor (3) an die Oberfläche der zumindest einen Zelle (1) zu drücken und an einer Aufnahmevorrichtung (2) abgestützt ist,
**dadurch gekennzeichnet, dass** das Halteelement (4) einen ersten Absatz (4.1) oder einen Konus aufweist und einen zweiten Absatz (4.2) aufweist, wobei der erste Absatz (4.1) als Anschlag für einen ersten Absatz (3.1) des Temperatursensors (3) wirksam ist oder die Konus-Verjüngung einen Anschlag für den ersten Absatz (3.1) des Temperatursensors (3) bildet, und wobei der zweite Absatz (4.2) nur bei hinreichender Verformung des Halteelements (4) als Anschlag für einen zweiten Absatz (3.2) des Temperatursensors (3) wirksam ist.

2. Batteriesystem nach Anspruch 1,
**dadurch gekennzeichnet, dass** im unbelasteten Zustand des Halteelements (4) ein Spalt zwischen dem zweiten Absatz (4.2) des Halteelements (4) und dem zweiten Absatz (3.2) des Temperatursensors (3) besteht.

3. Batteriesystem nach Anspruch 2,
**dadurch gekennzeichnet, dass** der Spalt im unbelasteten Zustand des Halteelements (4) weniger als 2 mm beträgt.

4. Batteriesystem nach einem der Ansprüche 1 bis 3,
**dadurch gekennzeichnet, dass** das Halteelement (4) einen ersten Abschnitt (4.F) und einen zweiten Abschnitt (4.S) aufweist, wobei der erste Absatz (4.1) im ersten Abschnitt (4.S) und der zweite Absatz (4.2) im zweiten Abschnitt (4.F) angeordnet ist.

5. Batteriesystem nach Anspruch 4,
**dadurch gekennzeichnet, dass** der zweite Abschnitt (4.F) zur Verringerung der Steifigkeit eine geringere Querschnittsfläche aufweist als der erste Abschnitt (4.S).

6. Batteriesystem nach zumindest einem der Ansprüche 4 bis 5,
**dadurch gekennzeichnet, dass** der erste Abschnitt (4.S) des Halteelements (4) einen dritten Absatz (4.3) aufweist, der zumindest abschnittsweise auf einer ersten Fläche (2.1) der Aufnahmevorrichtung (2) aufliegt.

7. Batteriesystem nach Anspruch 6,
**dadurch gekennzeichnet, dass** der erste Abschnitt (4.S) des Halteelements (4) einen vierten Absatz (4.4) aufweist, der zumindest abschnittsweise auf einer zweiten, der ersten Fläche (2.1) gegenüberliegenden Fläche (2.2) der Aufnahmevorrichtung (2) aufliegt.

8. Batteriesystem nach einem der Ansprüche 1 bis 7,
**dadurch gekennzeichnet, dass** die Aufnahmevorrichtung (2) durch eine Elektronikeinheit gebildet ist, die zur Erfassung von Betriebsgrößen von zumindest einzelnen Zellen eingerichtet (1) ist.

9. Batteriesystem nach einem der Ansprüche 1 bis 7,
**dadurch gekennzeichnet, dass** die Aufnahmevorrichtung (2) durch einen Zellverbinder-Halter gebildet ist.

10. Batteriesystem nach einem der Ansprüche 1 bis 9,
**dadurch gekennzeichnet, dass** der Temperatursensor (3) einen Sensorabschnitt (3.S) und einen Leitungsabschnitt (3.L) aufweist, und wobei der Sensorabschnitt (3.S) an einem Ende des Halteelements (4) hervorsteht und wobei der Leitungsabschnitt (3.L) durch das Halteelement (4) hindurchgeführt ist.

11. Batteriesystem nach einem der Ansprüche 1 bis 10,
**dadurch gekennzeichnet, dass** das Halteelement (4) aus einem Elastomer, bevorzugt aus EPDM, besteht.

## Claims

1. A battery system, comprising a plurality of cells (1), a temperature sensor (3) adapted to detect the temperature at a surface of at least one cell (1), an elastic retaining element (4) adapted to press the temperature sensor (3) to the surface of the at least one cell (1) and supported at a receiving device (2),
**characterized in that** the retaining element (4) comprises a first step (4.1) or a cone and comprises a second step (4.2), wherein the first step (4.1) acts as a stop for a first step (3.1) of the temperature sensor (3) or the taper of the cone forms a stop for the first step (3.1) of the temperature sensor (3), and wherein the second step (4.2) acts as a stop for a second step (3.2) of the temperature sensor (3) only when the retaining element (4) is sufficiently deformed.

2. The battery system according to claim 1,
**characterized in that**, in the unloaded state of the retaining element (4), there is a gap between the second step (4.2) of the retaining element (4) and the second step (3.2) of the temperature sensor (3).

3. The battery system according to claim 2,
**characterized in that** the gap is less than 2 mm in the unloaded state of the retaining element (4).

4. The battery system according to one of claims 1 to 3,
**characterized in that** the retaining element (4) comprises a first section (4.F) and a second section (4.S), wherein the first step (4.1) is arranged in the first section (4.S) and the second step (4.2) is arranged in the second section (4.F).

5. The battery system according to claim 4,
**characterized in that**, in order to reduce the stiffness, the second section (4.F) comprises a smaller cross-sectional area than the first section (4.S).

6. Battery system according to at least one of claims 4 to 5,
**characterized in that** the first section (4.S) of the retaining element (4) comprises a third step (4.3) which rests on a first surface (2.1) of the receiving device (2) at least in sections.

7. The battery system according to claim 6,
**characterized in that** the first section (4.S) of the retaining element (4) comprises a fourth step (4.4) which rests on a second surface (2.2) of the receiving device (2) opposite to the first surface (2.1) at least in sections.

8. The battery system according to one of claims 1 to 7,
**characterized in that** the receiving device (2) is formed by an electronics unit which is adapted to detect operating parameters of at least individual cells (1).

9. The battery system according to one of claims 1 to 7,
**characterized in that** the receiving device (2) is formed by a cell-connector holder.

10. The battery system according to one of claims 1 to 9,
**characterized in that** the temperature sensor (3) comprises a sensor section (3.S) and a wire section (3.L), and wherein the sensor section (3.S) protrudes at an end of the retaining element (4) and wherein the wire section (3.L) is guided through the retaining element (4).

11. The battery system according to one of claims 1 to 10,
**characterized in that** the retaining element (4) consists of an elastomer, preferably of EPDM.

## Revendications

1. Système de batterie, comprenant une pluralité de cellules (1), un capteur de température (3) prévu pour déterminer la température à la surface d'au moins une cellule (1), un élément élastique de maintien (4) prévu pour serrer le capteur de température (3) contre la surface de l'au moins une cellule (1) et soutenu par un dispositif de réception (2),
**caractérisé en ce que** l'élément de maintien (4) présente un premier épaulement (4.1) ou un cône et un deuxième épaulement (4.2), le premier épaulement (4.1) agissant comme butée pour un premier épaulement (3.1) du capteur de température (3) ou l'effilement en cône formant une butée pour le premier épaulement (3.1) du capteur de température (3), et le deuxième épaulement (4.2) n'agissant comme butée pour un deuxième épaulement (3.2) du capteur de température (3) qu'en cas de déformation suffisante de l'élément de maintien (4).

2. Système de batterie selon la revendication 1, **caractérisé en ce qu'**en état exempt de contrainte de l'élément de maintien (4), un interstice est formé entre le deuxième épaulement (4.2) de l'élément de maintien (4) et le deuxième épaulement (3.2) du capteur de température (3).

3. Système de batterie selon la revendication 2, **caractérisé en ce que** l'interstice est inférieur à 2 mm en état exempt de contrainte de l'élément de maintien (4).

4. Système de batterie selon l'une des revendications 1 à 3, **caractérisé en ce que** l'élément de maintien (4) présente une première partie (4.F) et une deuxième partie (4.S), le premier épaulement (4.1) étant situé dans la première partie (4.S) et le deuxième épaulement (4.2) dans la deuxième partie (4.F).

5. Système de batterie selon la revendication 4, **caractérisé en ce que**, pour réduire la rigidité, la deuxième partie (4.F) présente une surface en section transversale inférieure à celle de la première partie (4.S).

6. Système de batterie selon au moins une des revendications 4 et 5, **caractérisé en ce que** la première partie (4.S) de l'élément de maintien (4) présente un troisième épaulement (4.3), lequel repose au moins en partie sur une première face (2.1) du dispositif de réception (2).

7. Système de batterie selon la revendication 6, **caractérisé en ce que** la première partie (4.S) de l'élément de maintien (4) présente un quatrième épaulement (4.4), lequel repose au moins en partie sur une deuxième face (2.2), opposée à la première face (2.1), du dispositif de réception (2).

8. Système de batterie selon l'une des revendications 1 à 7, **caractérisé en ce que** le dispositif de réception (2) est formé par une unité électronique prévue pour la détermination de grandeurs de fonctionnement d'au moins certaines cellules (1).

9. Système de batterie selon l'une des revendications 1 à 7, **caractérisé en ce que** le dispositif de réception (2) est formé par un support de connecteur de cellules.

10. Système de batterie selon l'une des revendications 1 à 9, **caractérisé en ce que** le capteur de température (3) présente une partie de détection (3.S) et une partie de ligne (3.L), et dans lequel la partie de détection (3.S) est saillante à une extrémité de l'élément de maintien (4) et la partie de ligne (3.L) traverse l'élément de maintien (4).

11. Système de batterie selon l'une des revendications 1 à 10, **caractérisé en ce que** l'élément de maintien (4) est en élastomère, préférentiellement en EPDM.
